# EUROPEAN PATENT APPLICATION

(11) **EP 3 203 197 A1**
(43) Date of publication of application: **09.08.2017**
(21) Application number: 17154721.9
(22) Date of filing: 03.02.2017
(51) Int. Cl.: G01F 23/00, G01F 23/04, G01F 23/24, H01R 35/00

(54) **MEASURING SENSOR, IN PARTICULAR OF A LEVEL OF A LIQUID, AND INTERNAL COMBUSTION ENGINE COMPRISING SAID SENSOR**

(30) Priority: 05.02.2016 IT UB20160245
(71) Applicant: FPT Industrial S.p.A., 10156 Torino (IT)
(72) Inventor: SANARICO, Francesco, 10040 DRUENTO (IT)
(74) Representative: Fiume, Orazio

(57) **Abstract**

Measuring sensor (S), in particular of a level of a liquid (L), in particular for the lubricating oil of an internal combustion engine, the sensor comprising a body (B) with a longitudinal extension with at least one related intermediate portion (BI) having cylindrical symmetry with respect to said longitudinal extension (X) and a bushing (T) internally complementary to said intermediate portion, so that said body can freely rotate in the bushing with respect to said longitudinal extension (X) and wherein the bushing externally comprises fixing means for fixing the sensor to an opening of a container of said liquid.

## Description

### Field of the invention

The present invention relates to the field of measuring sensors, in particular for measuring the level of a liquid, and more in particular for measuring the level of the lubricating oil in the sump of a combustion engine.

### State of the art

The knows sensors must be screwed in suitable openings of a container or a part of the engine e.g. to measure the level of a liquid in the fuel tank or in the oil sump or to measure a crankshaft phase. For the level measurements, the automotive field frequently employs the so-called "hot wire" sensors, i.e. sensors performing a voltamperometric measurement on a resistor whose resistance is proportional to the level of a liquid in which the resistor is immersed. The level sensor generally has a thin body that is inserted in a circular opening and screwed thereto, so that the end in the tank detects the liquid level to be measured. The end opposite the inner one is generally called "head" of the sensor.

The electrical connector allowing the connection of the sensor to the vehicle wiring is associated with the sensor head through an electrical cable.

In certain implementations, an external component is located above the sensor fixing opening, being a few centimeters away from it. To prevent the sensor from interfering with this external component, some known level sensors have an electrical connector associated with the sensor head by means of an electrical cable forming a 90° angle with respect to the longitudinal extension of the sensor. This type of sensor is generally called a level sensor "with side joint".

This kind of sensor has another problem. The orientation of the head, and therefore of the corresponding electrical connector, cannot be guaranteed after that the sensor has been fitted in the respective opening. Therefore, it is necessary to provide an electrical cable of the sensor and/or of the vehicle electrical wiring long enough to ensure their mutual interconnection, regardless of the orientation of the sensor head once it has been fitted on the respective opening.

However, too long cables suffer from vibrations and, in time, tend to touch other surrounding parts and to be scratched or, even worse, tend to touch components reaching temperatures higher than 300°C, with the result that the protective sheath of the electrical conductors cracks in a short time.

### Summary of the invention

Therefore, the object of the present invention is to provide a sensor, in particular a level sensor, ensuring under operating conditions a minimum axial size without however suffering from the aforesaid problem of orientation of the relative connector to the electric wiring.

The basic idea of the present invention is providing the sensor body with a tubular bushing, which is externally associated with the longitudinal, cylindrically symmetrical sensor body. The bushing has fixing means complementary to those of a fixing opening while being internally associated with the longitudinal sensor body, so that it can freely rotate about its extension axis.

Advantageously, after having screwed the bushing, the sensor remains free to rotate about its longitudinal axis. This solves any orientation problem of the sensor electrical connector.

It is an object of the present invention the measuring sensor, in particular of a level of a liquid according to claim 1.

It is a further object of the present invention an internal combustion engine comprising the aforesaid sensor, in particular a liquid level sensor.

The claims describe preferred variants of the invention by forming an integral part of the present description.

### Brief description of the figures

Further objects and advantages of the present invention will become apparent from the following detailed description of an embodiment thereof (and of its variants) and from the accompanying drawings given purely by way of non-limiting example, in which:
Figure 1 shows a side view of an example of a sensor according to the present invention,

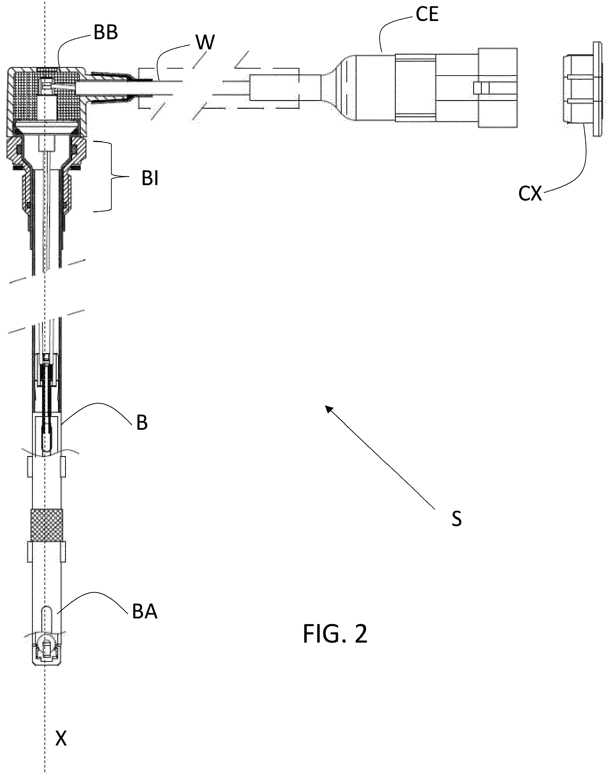

Figure 2 schematically shows a longitudinal section of the example of Figure 1,

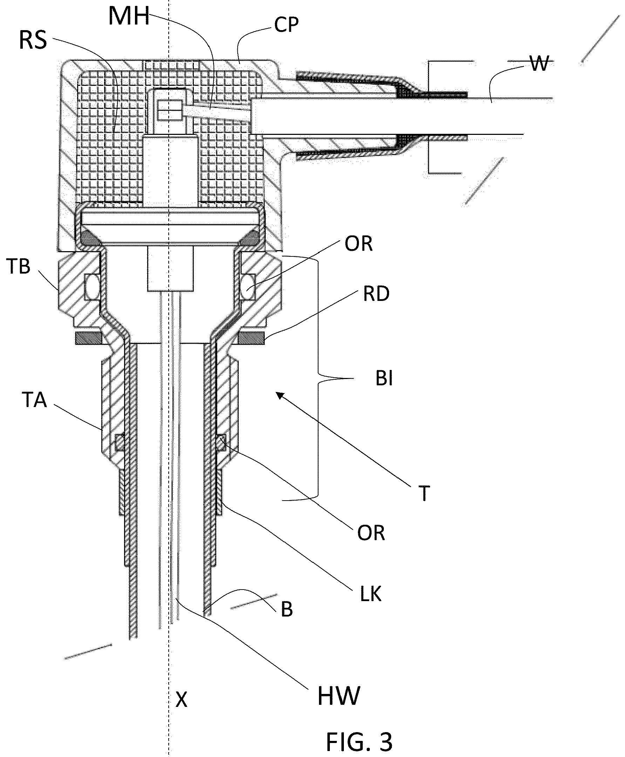

Figure 3 shows an enlarged view of a portion of Figure 2.

The same reference numbers and letters in the figures identify the same elements or components.

In the context of the present description, the term "second" component does not imply the presence of a "first" component. These terms are in fact used for clarity's sake only and are not intended in a limiting way.

### Detailed description of the embodiments

The sensor S object of the present invention is a measuring sensor, in particular of a level of a liquid, for example of the lubricating oil of an internal combustion engine or of the urea contained in an urea tank for reducing harmful emissions.

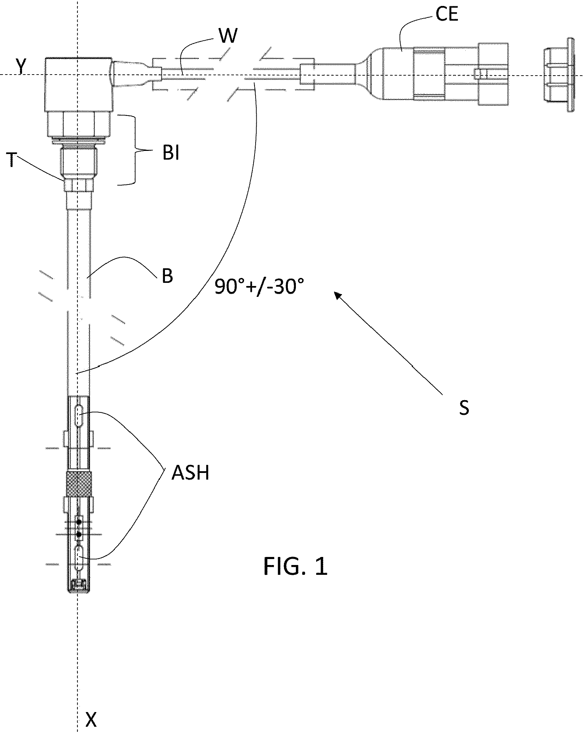

With reference to Figure 1, the sensor comprises a thin body B having a longitudinal extension X, with at least a respective intermediate portion BI with respect to the longitudinal extension X, having cylindrical symmetry as a solid of rotation. For example, it may have cylindrical and/or truncated-conical portions. Preferably, said intermediate portion has a shape tapered toward said first end BA.

At least on the intermediate portion BI it is fitted a bushing T internally complementary to the intermediate portion BI, so that the sensor body B can freely rotate in the bushing about the longitudinal extension X.

Evidently, the sensor body extends on opposite sides with respect to the bushing.

As far as described, therefore, the bushing has a tubular shape, with a longitudinal extension, whose inner cavity is a rotation surface with respect to the axis X in order to allow the body/bushing coupling.

Said bushing allows fitting the sensor on the opening of the container where the level measurements must be performed, for example the crankcase of an internal combustion engine, preferably of a diesel engine. Therefore, the bushing T externally comprises fixing means TH to secure the sensor S to said opening.

The body B of the sensor S comprises a first end BA intended to perform said level measurement, and a second end BB, opposite the first end, intended to remain accessible from the outside when the sensor is in operating conditions.

The first end BA and the second end BB are rigidly connected to each other.

The second end BB of the sensor comprises an electrical connector CE rigidly associated so as to form an angle of 90° +/- 30° with the longitudinal extension X of the body. The connector, generally made of plastic, is a rigid body, defining its own longitudinal extension Y, therefore it is implicit that the aforesaid angle of 90° +/- 30° is intended between the respective extensions X and Y.

In particular, the electrical connector CE can be directly associated with the second end BB or indirectly through an electrical rigid, semi-rigid or flexible cable W.

In any case, the electrical rigid, semi-rigid or flexible cable W starts from the end BB forming the aforesaid angle of 90° +/- 30°.

The bushing T comprises a first portion TA, facing the first end BA of the body B, in which the first portion TA is threaded in a complementary manner to the fixing opening of the sensor, and a second portion TB, facing said second end BB of the body, shaped in a manner complementary to a clamping tool, such as a spanner or a knurling and generally in any form allowing the bushing to be subjected to the required fixing torque.

A sealing washer RD may be preferably housed between the two portions TA and TB in order to seal the bushing T with respect to the opening of the container. The presence of the washer depends on the type of application.

Preferably, the bushing and/or the intermediate portion BI on which the bushing is fitted comprises an annular seat housing a sealing gasket OR, so as to seal the body B of the sensor with respect to the bushing T. Several gaskets may be provided along the longitudinal extension of said intermediate portion BI of the sensor body.

Preferably, the sensor comprises axial locking means LK to prevent a disengagement of the body from the bushing. These locking means are actually necessary only when
- the pressures inside the container are high and/or
- the orientation of the sensor in the space is/are such as to allow the undesired natural disengagement of the sensor body from the relative bushing.

According to the variant shown in Figure 1, the locking means LK consist of a crimp ring associated with the body B in an axial position between the intermediate portion BI and the first end BA of the sensor.

Preferably, the sensor is a level sensor of the "hot-wire" type, in which a HW wire runs inside the sensor body B from said second end to said first end and back toward said second end BB. The free ends of the wire HW are then connected with the pins of the electrical connector EC, possibly through the cable W to allow an external measuring unit to perform known voltamperometric measurements. Two ASH slots are formed in the sensor body and are spaced according to the extension X of the sensor in order to allow the measured liquid to enter the sensor body B.

The level measuring sensor can also be of the floating type associated with a rheostat.

With reference to Figure 1, the second end BB of the sensor is covered by a cap CP made of insulating material, preferably rubber, or even more preferably made of plastic-fiber glass when the sensor head is very close to hot parts, and the electrical terminals MH connecting the hot wire to the electrical connector CE are coated, preferably by filling, by an appropriate protective resin RS interposed between the terminals and the cap.

Said cap is pipe-shaped and is constantly integral with the sensor body, thus implementing no sliding contacts.

No sliding contacts are implemented regardless of the preferred implemented variant, since the whole sensor body can freely rotate in the support about the extension axis of the intermediate portion of the sensor, which coincides with the bushing extension axis.

The sensor is a rigid body, free of joints between the intermediate portion associated with the supporting bushing and the end portion intended for sensing the liquid level. According to a preferred implementation of the invention, the sensor is particularly adapted to perform level measurements of the lubricating oil of an internal combustion engine.

Therefore, the oil sump, possibly in association with the engine crankcase, forms a container that contains a liquid, the lubricating oil, object of the level measurement.

The sensor S and the connector CE form a single body freely rotating about the extension axis X to connect the electrical connector CE to a complementary electrical connector CX, generally belonging to the electrical wiring of the vehicle where the sensor is intended to be installed.

There are possible variations to the described non-limiting example without thereby departing from the scope of protection of the present invention, comprising all the embodiments equivalent for a person skilled in the art. From the above description, a person skilled in the art is able to produce the object of the invention without introducing any further structural details. The elements and the characteristics shown in the various preferred embodiments, including the drawings, can be combined without thereby departing from the scope of protection of the present patent application. What described in the part relating to the state of the art is only for a better understanding of the invention and does not state the existence of what described. Moreover, if not specifically excluded in the detailed description, what described in the part relating to the state of the art can be considered in combination with the characteristics of the present invention, thus forming an integral part of the present invention. None of the characteristics of the different variants is therefore essential, and the individual characteristics of each preferred variant or drawing can be individually combined with the other described variants.

## Claims

1. Measuring sensor assembly (S) and relative support, in particular for measuring a level of a liquid, the sensor comprising a body (B) with a longitudinal extension defining an extension axis (X) with at least one related intermediate portion (BI) having cylindrical symmetry with respect to said longitudinal extension (X) and wherein said support is defined by a bushing (T) internally complementary to said intermediate portion so that said body can freely rotate in the bushing about said longitudinal extension (X) and wherein the bushing externally comprises fixing means for being fixed to a fixing opening.

2. Assembly according to claim 1, wherein said body comprises a first end (BA) intended to perform said measurement and a second end (BB), opposite said first end, intended to remain accessible from the outside when said sensor is in operating conditions, wherein said sensor comprises an electrical connector (CE) associated with said second end so as to form an angle of 90° +/- 30° with said longitudinal extension axis (X) of the body.

3. Assembly according to claim 2, wherein said first end (BA) and said second end (BB) are rigidly connected to each other.

4. Assembly according to claim 3, wherein said electrical connector (CE) is directly and rigidly associated with said second end (BB).

5. Assembly according to claim 3, wherein said electrical connector (CE) is indirectly associated with said second end (BB) through a rigid, semi-rigid or flexible electrical cable (W).

6. Assembly according to any one of the preceding claims, wherein said bushing (T) comprises:
- a first portion (TA), facing said first end (BA) of the body, wherein said first portion (TA) is threaded in a manner complementary to said opening of said container of said liquid, and
- a second portion (TB), facing said second end (BB) of the body, shaped in a manner complementary to a clamping tool of the bushing, such as a spanner.

7. Assembly according to any one of the preceding claims, wherein said bushing and/or said intermediate portion (BI) of the body comprise an annular seat for housing a sealing gasket (OR) between the bushing and said intermediate portion (BI) of the body (B) of the sensor (S).

8. Assembly according to any one of the preceding claims, wherein the sensor comprises axial locking means, intended to prevent a disengagement of said body from said bushing.

9. Assembly according to claim 8, wherein said locking means consist of a crimp ring associated with said body (B) between said intermediate portion (BI) and said first end (BA).

10. Assembly according to any one of the preceding claims, wherein said sensor is a level sensor and preferably a hot wire.

11. Internal combustion engine comprising a crankcase and an oil sump for collecting lubricating oil circulating in the engine and an oil level sensor, associated with an opening of the crankcase to measure a level of said oil, wherein said level sensor is in accordance with any one of claims from 1 to 10.
